(19) Europäisches Patentamt
European Patent Office
Office européen des brevets

(11) Veröffentlichungsnummer : **0 532 461 A1**

# (12) EUROPÄISCHE PATENTANMELDUNG

(21) Anmeldenummer : **92810670.7**

(51) Int. Cl.$^5$ : **C08G 18/32,** C08G 73/06

(22) Anmeldetag : **02.09.92**

(30) Priorität : **09.09.91 CH 2661/91**

(43) Veröffentlichungstag der Anmeldung : **17.03.93 Patentblatt 93/11**

(84) Benannte Vertragsstaaten : **CH DE ES FR GB IT LI NL SE**

(71) Anmelder : **CIBA-GEIGY AG**
**Klybeckstrasse 141**
**CH-4002 Basel (CH)**

(72) Erfinder : **Mühlebach, Andreas, Dr.**
**Les Grands Esserts 7**
**CH-1782 Belfaux (CH)**

## (54) Polymere mit Bispyrazol-Einheiten.

(57) Die Erfindung betrifft Polymere mit einem mittleren Molekulargewicht $M_n$ von grösser als 1000 bestehend aus gleichen oder verschiedenen wiederkehrende Einheiten der Formel I

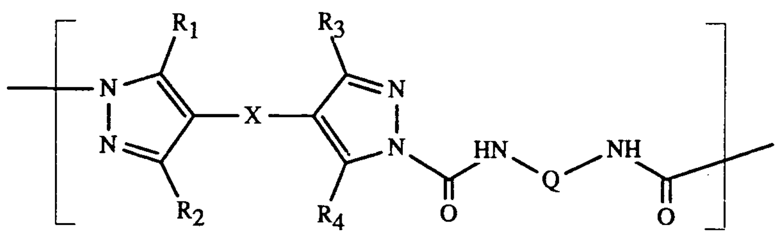

(I),

worin $R_1$, $R_2$, $R_3$ und $R_4$ unabhängig voneinander Wasserstoff, $C_1$-$C_4$-Alkyl, $C_6$-$C_{10}$-Aryl, -$OR_5$ bedeutet, wobei $R_5$ Wasserstoff oder $C_1$-$C_4$-Alkyl bedeutet,
X eine direkte Bindung oder einen zweiwertigen aliphatischen oder araliphatischen Rest mit bis zu 20 Kohlenstoffatomen darstellt und
Q einen zweiwertigen Alkyl-, Cycloalkyl-, Aralkyl-, oder Arylrest oder einen heterocyclischen Rest bedeutet,
sowie Zusammensetzungen enthaltend Bispyrazol-Polymere der Formel I.

EP 0 532 461 A1

Die vorliegende Erfindung betrifft neue Polymere mit Bispyrazol-Einheiten, Zusammensetzungen enthaltend diese Polymere und Verwendung dieser Zusammensetzungen.

Im Zuge der sich verschärfenden Umweltsituation insbesondere im Hinblick auf die Abfallbeseitigung ist es in zunehmendem Masse erforderlich, rezyklierbare Werkstoffe bereitzustellen. Eine Möglichkeit im Bereich der Kunststoffe besteht beispielsweise darin, thermolabile Polymere zu verwenden. Der Begriff "thermolabil", bzw. der Begriff "Thermolabilität" bedeuten in diesem Zusammenhang, dass sich die Polymere in die Monomere, aus denen sie aufgebaut wurden, zersetzen. Die so zurückgewonnen Grundstoffe lassen sich anschliessend wiederum zur Synthese von Kunststoffprodukten einsetzen.

O. Nuyken et al., Angew. Makromol. Chem. **187**, 207 (1991) beschreiben beispielsweise thermolabile Polymere mit Azogruppen gemäss folgender Formel:

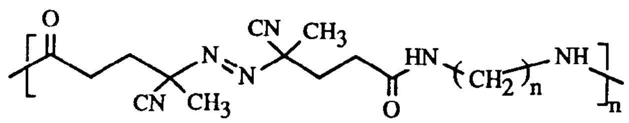 .

Diese Polymere können jedoch nicht ohne Zersetzung rezykliert werden, da die Monomere nicht unverändert zurückgewonnen werden können, weil Stickstoff abgespalten wird. Ausserdem erfolgt diese Fragmentierung bereits bei ca. 100 °C.

Andererseits ist die Blockierung von Polyisocyanaten mit vielfältigen Blockierungsmitteln, z.B. mit Phenolen, aber auch mit Pyrazolen, bekannt. Durch die Umsetzung der Polyisocyanate mit dem Blockierungsmittel wird eine Reaktion der Isocyanatgruppen mit aktive (bewegliche) Wasserstoffatome aufweisenden Verbindungen als Härter (bzw. Vernetzungsmittel), mit denen die reinen Isocyanate bereits bei sehr niedrigen Temperaturen unter Vernetzung reagieren, erst bei erhöhter Temperatur ermöglicht. Man kann daher blockierte Isocyanate bei Raumtemperatur mit den Vernetzungsmitteln mischen und die Gemische gewisse Zeit handhaben und lagern. Zur Aushärtung werden die Gemische auf eine Temperatur erhitzt, bei der nunmehr auch die blockierten Polyisocyanate mit den Härtern reagieren. Als geeignete Härter sind bereits viele Verbindungstypen beschrieben worden, z.B. Polyalkohole, Polyamine, Polythiole, Polycarbonsäuren, Tri- oder Diamide, Urethane oder Wasser.

Die US 4,976,837 beschreibt die Blockierung von Polyisocyanaten mit Pyrazolderivaten. Als Vorteil der so blockierten Isocyanate wird angegeben, dass diese bei relativ niedrigen Temperaturen reaktionsfähiges Polyisocyanat bilden und trotzdem bei Raumtemperatur gegenüber aktive Wasserstoffatome aufweisenden Verbindungen als Härter stabil seien. Weiterhin wird der Einsatz solcher Gemische als Bestandteil von elektrophoretisch abscheidbaren Farben beschrieben. Hierfür werden Polyamidpolyaminharze, beispielsweise die Umsetzungsprodukte von dimeren Fettsäuren mit aliphatischen Polyaminen, als geeignete Härter angeführt.

Aus der US 4,797,494 ist auch schon bekannt, Gemische aus Polyalkoholen und bestimmten Polyisocyanaten, die durch Umsetzung mit 3-Methylpyrazol blockiert sind, zum Kleben zu benutzen. Die beschriebenen Gemische härten bereits bei Temperaturen im Bereich von 120 °C und lassen somit die Herstellung von Klebeverbindungen bei diesen relativ niedrigen Temperaturen zu. Weiterhin ist beschrieben, dass die Gemische bei Raumtemperatur längere Zeit stabil sind. Nachteilig bei diesen Polyole enthaltenden Gemischen ist jedoch, dass die Gelierzeit, insbesondere bei Temperaturen von 100 - 120 °C, sehr lang ist.

Es wurde nun eine klasse von neuen Polymeren gefunden, die thermolabil sind und zudem hohe Glasübergangstemperaturen ($T_g$-Werte) aufweisen, also Eigenschaften, die mit anderen Thermoplasten oder Duromeren kaum erzielt werden können. Weiterhin können diese Bispyrazol-Polymere in Mischungen mit Nucleophilen, wie beispielsweise Amin- oder Hydroxy-terminierten Präpolymeren, als wärmehärtbare Klebstoffe ohne freie Isocyanatgruppen verwendet werden.

Gegenstand der vorliegenden Erfindung sind somit Polymere mit einem mittleren Molekulargewicht $M_n$ von grösser als 1000 bestehend aus gleichen oder verschiedenen wiederkehrende Einheiten der Formel I

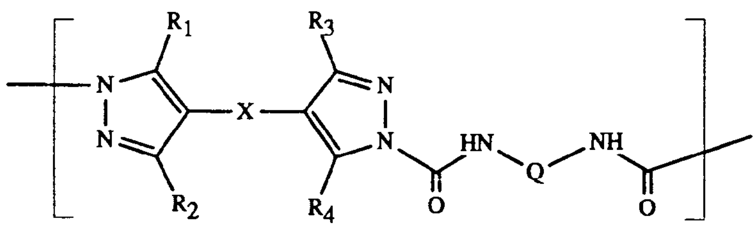

(I),

worin $R_1$, $R_2$, $R_3$ und $R_4$ unabhängig voneinander Wasserstoff, $C_1$-$C_4$=Alkyl, $C_6$-$C_{10}$-Aryl oder -$OR_5$ bedeuten, wobei $R_5$ Wasserstoff oder $C_1$-$C_4$-Alkyl bedeutet,
X eine direkte Bindung oder einen zweiwertigen aliphatischen oder araliphatischen Rest mit bis zu 20 Kohlenstoffatomen darstellt und
Q einen zweiwertigen Alkyl-, Cycloalkyl-, Aralkyl- oder Arylrest oder einen heterocyclischen Rest bedeutet.

Beispiele für einen zweiwertigen aliphatischen oder araliphatischen Rest X mit bis zu 20 Kohlenstoffatomen sind Alkylene wie Methylen, Ethylen, 1,2-Propylen, 1,3-Propylen, sowie die verschiedenen Butylene, Pentylene, Hexylene, Heptylene, Decylene, Dodecylene, Hexadecylene oder Icosylene oder Aryl- oder Heteroarylalkylene, wie beispielsweise -$CH_2$-Z-$CH_2$-, wobei Z einen zweiwertigen Rest darstellt, der sich von Benzol, Naphthalin, Biphenyl, Diphenylmethan, Benzophenon, Diphenylsulfid, Diphenylether, Diphenylsulfoxid, Diphenylsulfon, Furan, Pyrrol, Thiophen, Pyridin, Pyrazol oder Imidazol ableitet.

Bevorzugt sind Polymere, worin X eine direkte Bindung oder einen Rest der Formel

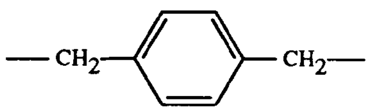

bedeutet.

Als zweiwertiges Alkyl oder Aralkyl kann Q die gleiche Bedeutung haben, wie bereits für X definiert.

Als zweiwertiges Cycloalkyl kann Q ein Cyclopentylen- oder Cyclohexylenrest sein

Als zweiwertiges Aryl kann Q ein 1,4- oder 1,3-Phenylen-, Naphthylen- oder Biphenylenrest sein.

Der Rest Q basiert auf zur Vernetzung fähigen Polyisocyanaten mit einer Funktionalität von 2, wie beispielsweise Hexamethylendiisocyanat, Trimethylhexamethylendiisocyanat, Cyclohexandiisocyanat, Isophorondiisocyanat (3,5,5-Trimethyl-1-isocyanato-3-isocyanatomethylcyclohexan), Methylendicyclohexylisocyanat, p-Phenylendiisocyanat, Diisocyanatotoluol, z.B. 2,4-Diisocyanatotoluol, 2,6-Diisocyanatotoluol und technische Gemische von beiden Isomeren, Naphthylendiisocyanat, insbesondere 1,5-Naphthylendiisocyanat, ferner Dianisidindiisocyanat, Methylendiphenyldiisocyanat, insbesondere das 4,4'-Isomere, aber auch technische Gemische verschiedener Isomere dieser Grundstruktur, beispielsweise der 4,4'- und 2,4'-Isomeren, oder Polymethylenpolyphenylisocyanate. Ebenfalls gut geeignet sind auch Polyisocyanate, die durch Umsetzung von Polyisocyanaten mit sich selbst über Isocyanatgruppen erhältlich sind, wie Uretdione oder Carbodiimidverbindungen, die durch Reaktion zweier Isocyanatgruppen entstehen. Für die Erfindung geeignet sind auch Polyisocyanatpräpolymere, die durchschnittlich mehr als eine Isocyanatgruppe pro Molekül aufweisen und durch Vorreaktion eines molaren Überschusses beispielsweise eines der oben genannten Polyisocyanate mit einer organischen Verbindung erhalten werden, die mindestens zwei aktive Wasserstoffatome pro Molekül aufweist, z.B. in Form von Hydroxylgruppen wie bei Polyalkylenglykolen. Isocyanate, wie die genannten, sind allgemein verfügbar und in grosser Vielfalt kommerziell erhältlich.

Bevorzugt sind Polymere, worin Q einen Rest der Formeln

$-(CH_2)_6-$ , 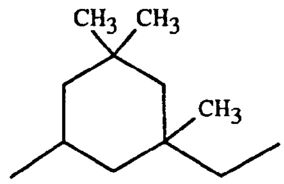 ,

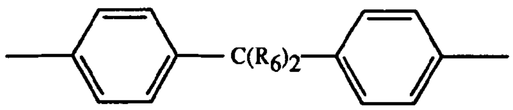

darstellt, wobei die Reste $R_6$ unabhängig voneinander Wasserstoff oder $C_1$-$C_4$-Alkyl bedeuten.

Bedeutet in den obigen Definitionen ein Substituent $C_1$-$C_4$-Alkyl, so handelt es sich beispielsweise um Methyl, Ethyl, n-Propyl, Isopropyl, n-Butyl, sec-Butyl oder Isobutyl.

Bedeutet ein Substituent $C_6$-$C_{10}$-Aryl, so handelt es sich beispielsweise um Phenyl oder Naphthyl, das durch mindestens ein Halogenatom und/oder eine Alkyl- oder Alkoxygruppe mit 1 bis 4 Kohlenstoffatomen substituiert sein kann.

Weiterhin bevorzugt sind Polymere, worin $R_1$, $R_2$, $R_3$ und $R_4$ jeweils Methyl bedeuten.

Die erfindungsgemässen Polymere können in an sich bekannter Weise beispielsweise durch die Umsetzung eines Bispyrazols der Formel Ia

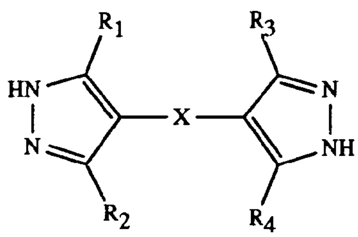 (Ia)

mit einem Diisocyanat der Formel Ib

OCN-Q-NCO (Ib)

hergestellt werden, wobei $R_1$ bis $R_4$, X und Q die oben angegebenen Bedeutungen haben.

Bevorzugt werden exakt äquimolare Mengen der Verbindungen der Formeln Ia und Ib zur Herstellung der Bispyrazol-Polymere eingesetzt.

Bispyrazole der Formel Ia sind in an sich bekannter Weise beispielsweise durch die Umsetzung passend gewählter Bis-diketone, z.B. Bis-1,3-diketone, mit Hydrazin ohne oder mit einem geeigneten Lösemittel zugänglich, gemäss folgendem Schema

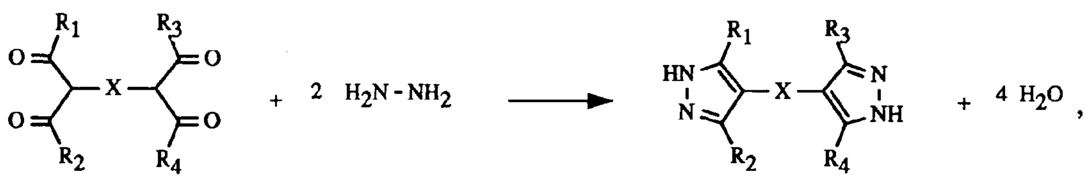


wobei $R_1$ bis $R_4$ und X die oben angegebenen Bedeutungen haben.

Die erfindungsgemässen Bispyrazol-Polymere stellen flammwidrige Werkstoffe mit hohen $T_g$-Werten dar, die aufgrund ihrer thermolabilen Eigenschaften rezyklierbar sind. Sie eigenen sich als solche beispielsweise für Verkapselungen oder als Reaktivkomponente in Klebstoffmischungen mit guter Lagerstabilität.

Gegenstand der vorliegenden Erfindung sind weiterhin wärmehärtbare Zusammensetzungen enthaltend

a) mindestens ein Polymer gemäss obiger Formel I und

b1) mindestens ein primäres oder sekundäres Polyamine mit einer Funktionalität von gleich oder grösser

als 2 oder

b2) mindestens ein Polyol mit einer Funktionalität von gleich oder grösser als 2.

Die primären oder sekundären Polyamine gemäss Komponente b1) sind als zur Vernetzung fähige Verbindungen zu verstehen und fungieren somit als Härter der erfindungsgemässen Zusammensetzungen. Infolge der Deblockierung des Bispyrazol-Polymers, oder anders ausgedrückt, des polymerisch blockierten Isocyanates durch Erwärmung der Zusammensetzung führt dieses zur einer Vernetzung des Polyisocyanats. "Zur Vernetzung fähig" bedeutet in diesem Zusammenhang, dass das Polyamin eine Funktionalität von gleich oder grösser als 2 haben muss, da aufgrund der Struktur des Polymers nur ein difunktionelles Polyisocyanat zur Verwendung kommt.

Als Polyamine sind im allgemeinen alle Verbindungen mit mindestens zwei Aminogruppen geeignet. Als Beispiele von geeigneten Polyaminen seien aliphatische Polyamine, z.B Diethylentriamin oder Triethylentetramin und andere Polyalkylenpolyamine, cycloaliphatische Diamine, wie Cyclohexandiamine, aromatische Diamine, z.B. Methylendianilin, angeführt. Da die erfindungsgemässem Polymere gewöhnlich Schmelzpunkte weit oberhalb von 100°C aufweisen, ist es günstig, wenn die erfindungsgemässen Zusammensetzungen Polyamine enthalten, die bei Raumtemperatur flüssig sind, um die Zusammensetzungen besser auftragen zu können.

Bevorzugt sind Zusammensetzungen enthaltend als Komponente b1) ein Polyoxyalkylenpolyamin.

Polyoxyalkylenpolyamine sind beispielsweise Polyoxyethylenamine und Polyoxypropylenpolyamine des folgenden difunktionellen Typs:

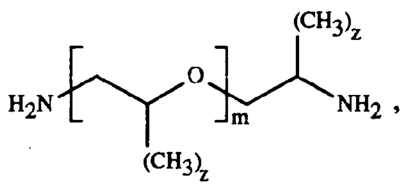

worin z 0 oder 1 ist und m z.B. die Werte 2 oder 3 aufweisen kann. Die Polyoxyalkylenkette in den genannten Polyaminen kann jedoch auch verzweigt sein und mehr als zwei Aminogruppen im Molekül aufweisen. Weiterhin können z.B. Polyoxypropylenpolyamine des folgenden (trifunktionellen) Typs verwendet werden:

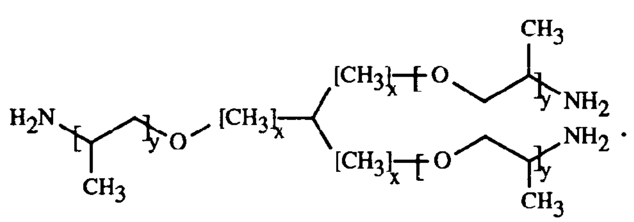

x kann in dieser Formel z.B. 0 oder auch 1 sein, die y-Werte können z.B. 2 oder 3 sein, die von kette zu kette gegebenenfalls auch differieren.

Polyoxyalkylenamine, wie im vorhergehenden Abschnitt beschrieben, sind unter der Bezeichnung Jeffamine® der Firma Texaco Chemical Co. auch kommerziell erhältlich.

Insbesondere bevorzugt sind Zusammensetzungen enthaltend als Komponente b1) ein Polyoxypropylenpolyamin oder ein Polyoxyethylenpolyamin.

Erfindungsgemäss in Frage kommende Polyole gemäss der Komponente b2) sind aliphatische, cycloaliphatische oder araliphatische Strukturelemente, z.B. Diole oder höher funktionelle Polyole. Beispiele hierfür sind Ethylenglykol, Propan-1,2- oder -1,3-diol, Butan-1,2-, -1,3-, -1,4- oder -2,3-diol, Pentan-1,5-diol, Hexan-1,6-diol, Hexan-2,4,6-triol, 2,2-Dimethyl-1,3-propandiol, 2-Ethyl-2-butylpropan-1,2-diol, 1,2-Tetradecandiol, 1,2-Hexandecandiol, 1,12-Dihydroxyoctadecan, Glycerin, Erythrit, Pentaerythrit, Sorbit, Mannit, 1,1,1-Trimethylolpropan, 1,4-Dimethylolbenzol, 4,4′-Dimethyloldiphenyl, Dimethylolxylole, Dimethylolanisole, Dimethylolnaphthaline, Polyetheralkohole wie Diglycerin, ferner Bis(2,3-dihydroxypropylether), Triglycerin, Dipentaerythrit, β-Hydroxyethylether von Polyalkoholen, wie Diethylenglykol, Triethylenglykol oder Polyethylenglykole, Polypropylenglykole und andere Polyalkylenglykole oder β-Hydroxyethylether von Phenolen, wie Hydrochinon-bis(β-hydroxyethylether), Bis(β-hydroxyethylether) von Bisphenolen, wie von 4,4′-Dihydroxydiphenyl-dimethylmethan, ferner β-Hydroxyethylether von Glycerin, Pentaerythrit, Sorbit oder Mannit, Kondensate von Alkylenoxiden, wie Ethylen-, Propylen-, Butylen- oder Isobutylenoxid, mit den obengenannten Polyalkoholen, ferner Hydroxyester, wie z.B. Monoglyceride, wie Monostearin, ferner Ethylenglykoldilactat, Monoester von Pentaerithryt, wie das Monoacetat, ferner Bis-(4-hydroxycyclohexyl)methan, Bis-(4-hydroxycyclohexyl)-dimethylmethan, 2,2-Bis-(4-hydroxycyclohexyl)-propan, Cyclohexan-1,1-dimethylol; 2,2,6,6-Tetramethylol-cyclohexanol, 1,2-, 1,3- und 1,4-Dihydroxycylohexan und 1,3-Dihydroxycyclopentan.

Bevorzugt sind Zusammensetzungen enthaltend als Komponente b2) ein Polyoxyalkylenpolyol.

Insbesondere bevorzugt sind Zusammensetzungen enthaltend als Komponente b2) ein Polypropylenglykol oder ein Polyethylenglykol.

Das polymerisch blockierte Isocyanate der Formel I und das Polyamin oder Polyol sind zweckmässig in der Zusammensetzung in einem Verhältnis vorhanden, das gewährleistet, dass Aminogruppen bzw. Hydroxygruppen in einer Menge geliefert werden können, die der 0,5-fachen bis doppelten Menge der Isocyanatgruppen stöchiometrisch äquivalent ist, die die Zusammensetzung zur Verfügung stellen kann. Bevorzugt weisen die Zusammensetzungen ein äquimolares Verhältnis von blockierten Isocyanat- zu Aminogruppen bzw. Hydroxygruppen auf. Das stöchiometrische Verhältnis der genannten Gruppen in der Zusammensetzung bestimmt unter anderem den Polymerisationsgrad bei der Härtungsreaktion und die Art der gebildeten Endgruppen. Durch Variation dieses Verhältnisses können z.B. die Reaktivität der Zusammensetzung und ihre mechanischen Eigenschaften nach der Härtung gesteuert werden.

Zusätzlich zu den genannten Komponenten können die erfindungsgemässen Zusammensetzungen weitere übliche Bestandteile in den üblicherweise eingesetzten Mengen enthalten, z. B. Viskositätsregler, Streckmittel, Füllstoffe, Verstärkungsmittel, Metallpartikeln, Pigmente, Farbstoffe, organische Lösungsmittel, Weichmacher, Haftvermittler, Fungizide, Antioxidantien, Verlaufsmittel, Verdünner, z.B. Reaktivverdünner, wie Epoxidharze, und dergleichen mehr.

Die Gelier- bzw. Härtungszeiten der erfindungsgemässen Zusammensetzungen liegen im allgemeinen bei einer Temperatur von ca. 140 °C im Bereich von 5 Minuten bis 60 Minuten.

Zudem weisen die beschriebenen Zusammensetzungen ein gutes Stabilitäts-/ Reaktivitätsverhältnis auf, obwohl diese beiden Eigenschaften normalerweise in Widerspruch zueinander stehen. Um nämlich eine lange Lagerstabilität zu erreichen, ist es günstig, dem blockierten Isocyanat ein möglichst wenig reaktives Vernetzungs- oder Härtungsmittel zuzusetzen. Wenig reaktive Vernetzungsmittel führen aber zu langen Gelierzeiten. Die erfindungsgemässen Zusammensetzungen lassen sich jedoch bei Raumtemperatur oder mässig erhöhter Temperatur ohne weiteres mehrere Monate lang lagern, ohne dass ihre Viskosität nennenswert ansteigt. Sie weisen daher bei relativ hoher Reaktivität eine Stabilität auf, die zumindest der herkömmlicher Zusammensetzungen, basierend auf blockierten Isocyanaten, entspricht und diese in manchen Fällen übertrifft.

Bei vielen mit niedermolekularen Blockierungskomponenten geschützten Isocyanaten ist nachteilig, dass die Blockierungskomponenten, wie beispielsweise Phenol, Pyrazol oder Oxim, nach der Härtungsreaktion freigesetzt werden und oft eine erhebliche Wasserlöslichkeit und einen erheblichen Dampfdruck aufweisen. Die erfindungsgemässen Bispyrazol-Einheiten aufweisende Isocyanat-Systeme haben unter anderem den Vorteil, dass die Blockierungskomponente in Wasser praktisch unlöslich ist und einen sehr niedrigen Dampfdruck aufweist. So ist beispielsweise praktisch keine Beeinflussung der mechanischen Eigenschaften und eine äussert geringe Wasseraufnahme feststellbar.

Die erfindungsgemässen Zusammensetzungen können für alle Anwendungen verwendet werden, wo warmhärtende Zusammensetzungen auf Basis blockierter Polyisocyanate gewöhnlich eingesetzt werden, z.B. als Farbe bzw. Basis einer Farbe, als Dichtmasse oder als Klebstoff, inbesondere als Einkomponentenklebstoff. Die Härtung kann dabei durch Zufuhr von Wärme in jeglicher Form erfolgen.

Gegenstand der Erfindung ist daher weiterhin die Verwendung der Zusammensetzungen als Einkomponentenklebstoffe.

Die Klebstoffzusammensetzungen gemäss vorliegender Erfindung ermöglichen die Verklebung unterschiedlichster Substrate, z.B. Holz, Metalle, Glas und aller Arten von Kunststoffen. Die Klebestellen weisen eine hervorragende Haltbarkeit und mechanische Belastbarkeit auf.

Die folgenden Beispiele illustrieren die Erfindung weiter.

I. Herstellung der Bispyrazole

Beispiel A:

Synthese von Bis(3,5-dimethylpyrazol):

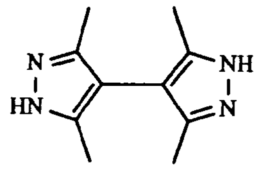

5,8 g (29,3 mmol) Bis(acetylaceton) [hergestellt nach Org. Synthesis IV, 869] werden in einem 100 ml Dreihalskolben mit Rückflusskühler unter $N_2$ portionsweise zu 42 ml Hydrazinhydrat (80 %ig; 0,87 mol $H_2N\text{-}NH_2$) gegeben. Es erfolgt eine exotherme Reaktion, wobei die Temperatur des Reaktionsgemisches mit einem Eisbad unter 50 °C gehalten wird. Nach Beendigung der Reaktion wird das Gemisch auf 0 °C gekühlt und filtriert. Anschliessend wird das Rohprodukt getrocknet. Danach wird aus Methanol/Wasser (1:1) umkristallisiert und im Hochvakuum bei 40 °C getrocknet. Es werden 2,6 g weisse Kristalle erhalten.
Ausbeute: 47 % der Theorie.
Schmelzpunkt: 305-306 °C.

| Elementaranalyse: | | | |
|---|---|---|---|
| ber.: | C 63,13 %; | H 7,42 %; | N 29,45 %. |
| gef.: | C 63,02 %; | H 7,43 %; | N 29,64 %. |

$^1$H-NMR (Methanol-$d_4$): 2,04 ppm, s: -**$CH_3$**.
UV (Methanol, c = 0,229 0,229 g/l)
$\lambda_{max}$ = 225 nm; log $\epsilon$ = 3,87
(theor.: $\lambda_{max}$ = 223 nm; log $\epsilon$ = 3,84)

<u>Beispiel B:</u>

Synthese von Xylylen-bis(3,5-dimethylpyrazol):

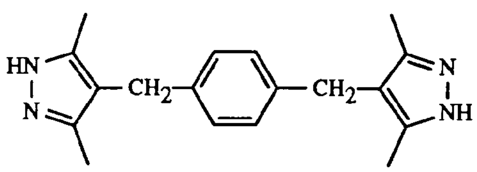

In einem 1 l Rundkolben werden 86,91 g (0,8 mol) Trimethylchlorsilan in 400 ml Acetonitril unter $N_2$ gelöst. Danach werden 119,91 g (0,8 mol) Natriumjodid, gefolgt von 16,02 g (0,16 mol) Acetylaceton hinzugegeben. Die entstehende orange-farbene Suspension wird auf 0 °C gekühlt. Anschliessend werden langsam 10,73 g (0,08 mol) Terephthaldialdehyd zugegeben. Nach dem Erwärmen auf Raumtemperatur wird zunächst 6 Stunden gerührt, dann weitere 10 Stunden bei 60 °C. Nach dem Abkühlen auf Raumtemperatur werden 800 ml destilliertes Wasser hinzugegeben. Anschliessend wird das Rohprodukt dreimal mit je 260 ml Diethylether extrahiert. Die organischen Phasen werden vereinigt und siebenmal mit je 100 ml einer 10 %igen wassrigen Natriumthiosulfat-Lösung gewaschen. Anschliessend wird die organische Phase nochmals zweimal mit je 150 ml einer gesättigten NaCl-Lösung gewaschen. Die Etherphase wird dann über $MgSO_4$ getrocknet und in einem Rotationsverdampfer vollständig eingeengt. Danach wird im Hochvakuum bei 50 °C getrocknet. Es werden 21,0 g (0,0695 mol) eines hellbraunen Rohprodukts erhalten.
Rohausbeute: 86,8 %
Schmelzpunkt: 112 °C

| Elementaranalyse: | | |
|---|---|---|
| ber.: | C 71,50 %; | H 7,33 %. |
| gef.: | C 71,25 %; | H 7,39 %. |

$^1$H-NMR ($CDCl_3$): 2, 12 ppm, s (-$\mathbf{CH_3}$); 3,11 ppm, d, J = 7,5 Hz (-$\mathbf{CH_2}$-); 3,96 ppm, t, J = 7,5 Hz (-**CH**-); 7,07 ppm, s, (Aryl-**H**).
IR (KBr): ν(c=o) bei 1700 $cm^{-1}$, 1720 $cm^{-1}$

In einem 100 ml Dreihalskolben werden unter $N_2$ 125,4 ml Hydrazinhydrat (80 %ig; 2,58 mol $H_2N$-$NH_2$) vorgelegt. Dann werden 13,0 g (42,99 mmol) des oben beschriebenen Produkts langsam in kleinen Portionen zugegeben. Es erfolgt eine exotherme Reaktion, wobei die Temperatur des Reaktionsgemisches mit einem Eisbad unter 50 °C gehalten wird. Nach Beendigung der Reaktion wird das Gemisch auf 0 °C gekühlt und filtriert. Der Rückstand wird mit Eiswasser gewaschen. Die so erhaltenen gelblichen Kristalle (22,0 g) werden bei 50 °C im Hochvakuum getrocknet. Anschliessend wird das Produkt aus DMSO umkristallisiert, wobei 10,2 g weisser Kristalle erhalten werden.
Ausbeute: 80,6 %.
Schmelzpunkt: 327,6 °C (DSC).

| Elementaranalyse: | | | |
|---|---|---|---|
| ber.: | C 73,44 %; | H 7,53 %; | N 19,03 %. |
| gef.: | C 72,95 %; | H 7,52 %; | N 19,00 %. |

$^1$H-NMR (DMSO-$d_6$): 2,02 ppm, s (-$\mathbf{CH_3}$); 3,58 ppm, s, (-$\mathbf{CH_2}$-); 6,97 ppm, s, (Aryl-**H**); 11,91 ppm, s, (-N**H**-).

## II. Herstellung der Polymere

### II.1 Allgemeine Arbeitsvorschriften

a) Grenzflächenpolyaddition:
11,0 mmol eines Bispyrazols werden in 200 ml destilliertem Wasser gelöst, in einen Waring-Blendor-Mixer gegeben und bei ungefähr 20 000 U/min gerührt. Dazu wird rasch eine exakt äquimolare Lösung (11,0 mmol) eines Diisocyanats in 30 ml Methylenchlorid zugegeben und weitere 10 Minuten bei Raumtemperatur gerührt. Anschliessend wird das Methylenchlorid im Rotationsverdampfer entfernt, der Rückstand filtriert und das Produkt bei 40 °C im Hochvakuum getrocknet.
b) Lösungspolyadditon:
4,0 mmol eines Bispyrazols werden in einem 100 ml Dreihalskolben mit Rückflusskühler und Magnetrührer unter $N_2$ exakt eingewogen. Anschliessend wird eine Lösung von exakt 4,0 mmol Diisocyanat in 30 ml Toluol oder DMF zugegeben. Danach wird über 12 Stunden unter Rückfluss auf dem Ölbad gekocht. Nach dem Abkühlen wird das Polymer durch Eintropfen in Hexan [bei einer Toluol-Lösung bzw. Wasser/Methanol (1 : 1)] ausgefällt. Anschliessend wird die Lösung filtriert, das Produkt mit dem Fällungsmittel gewaschen und im Hochvakuum bei 50 °C getrocknet.

### II.2. Synthese der Polymere

In Tabelle 1 sind die Ausgangsverbindungen und Ausbeuten sowie die Polymerisationsart angegeben.

Tabelle 1

| Beispiel | Polymerisationsart | Bispyrazol gemäss Beispiel | Isocyanatverbindung | Ausbeute |
|---|---|---|---|---|
| 1 | Grenzfläche ($CH_2Cl_2/H_2O$) | A | Hexamethylendiisocyanat | 69 % |
| 2 | Grenzfläche ($CH_2Cl_2/H_2O$) | A | Methylendiphenyldiisocyanat | 80 % |
| 3 | Grenzfläche ($CH_2Cl_2/H_2O$) | A | Isophorondiisocyanat | 39 % |
| 4 | Lösung (Toluol) | B | Methylendiphenyldiisocyanat | 55 % |
| 5 | Lösung (DMF) | A | Methylendiphenyldiisocyanat | 52 % |
| 6 | Lösung (DMF) | B | Methylendiphenyldiisocyanat | 79 % |

II.3 Charakterisierung der Polymere

In Tabelle 2 sind die Elementaranalysen der Polymere aufgeführt In Tabelle 3 sind einige Eigenschaften der Polymere zusammengestellt.

Tabelle 2

| Beispiel | Kohlenstoff [%] | | Wasserstoff [%] | | Stickstoff [%] | |
|---|---|---|---|---|---|---|
| | ber. | gef. | ber. | gef. | ber. | gef. |
| 1 | 60,32 | 60,09 | 7,31 | 7,37 | 23,45 | 23,37 |
| 2 | 68,17 | 66,83 | 5,49 | 5,67 | 19,08 | 18,80 |
| 3 | 63,90 | 64,34 | 8,04 | 8,25 | 20,32 | 17,87 |
| 4 | 72,77 | 73,56 | 5,92 | 5,71 | 15,43 | 14,90 |
| 5 | 68,17 | 66,75 | 5,49 | 6,15 | 19,08 | 18,39 |
| 6 | 72,77 | 72,86 | 5,92 | 6,85 | 15,43 | 15,35 |

Tabelle 3

| Beispiel | $M_n$ (1) | $M_w$ (1) | $M_w/M_n$ (1) | $T_g$ (3) | $T_m$ (4) | $T_{Zers}$(50 %) (5) | $T_{Zers}$(100 %) (6) |
|---|---|---|---|---|---|---|---|
| 1 | - (2) | - (2) | - (2) | 120 °C | > $T_{Zers}$ | 290 °C | 312 °C |
| 2 | 2000 | 3700 | 1,85 | 182 °C | > $T_{Zers}$ | 305 °C | 340 °C |
| 3 | 1600 | 2600 | 1,63 | 163 °C | > $T_{Zers}$ | 290 °C | 320 °C |
| 4 | - (2) | - (2) | - (2) | 160 °C | > $T_{Zers}$ | 355 °C | > 400 °C |
| 5 | 1200 | 2100 | 1,75 | 180 °C | > $T_{Zers}$ | 310 °C | 350 °C |
| 6 | 1500 | 2700 | 1,80 | 165 °C | > $T_{Zers}$ | 345 °C | > 400 °C |

(1) Mittleres Molekulargewicht (GPC, Polystyrol-Eichung)
(2) nicht messbar, da unlöslich
(3) Glasübergangstemperatur
(4) Schmelztemperatur
(5) Temperatur bei der der Gewichtsverlust 50 % beträgt (TGA, 10 °C/min)
(6) Temperatur bei der eine vollständige Zersetzung auftritt (TGA, 10 °C/min)

## III. Anwendungsbeispiele

### III.1 Ein-komponenten-Klebstoff-Formulierungen

Die Bispyrazolpolymere (polymerisch blockierte Isocyanate) werden mit den entsprechenden äquimolaren Mengen eines Polyamins vermischt. Die Formulierungen sind in Tabelle 4 aufgeführt.

Tabelle 4

| Formulierung | Bispyrazol-Polymer gemäss | Polyamin (1) |
|---|---|---|
| I | Beispiel 1 (2,0 g) | Jeffamine® T 403 (1,7 g) |
| II | Beispiel 2 (2,0 g) | Jeffamine® T 403 (1,7 g) |
| III | Beispiel 3 (2,0 g) | Jeffamine® T 403 (1,4 g) |

(1) Jeffamine T 403: Polyoxypropylenpolyamin mit durchschnittlich 3 Aminogruppen im Molekül (MG ≈ 430)

Diese Gemische werden zweimal über einen Dreiwalzenstuhl gelassen. In Tabelle 5 sind die Eigenschaften zusammengefasst.

Tabelle 5

| Formulierung | Gelierzeit (140 °C) | Zugscherfestigkeit[(1)] (Al/Al) | Lagerstabilität (Raumtemperatur) |
|---|---|---|---|
| I | 50 min | 4,2 $N/mm^2$ | > 6 Monate |
| II | 40 min | 12,7 $N/mm^2$ | ≈ 2 Monate |
| III | 402 s | 6,5 $N/mm^2$ | > 5 Monate |

(1) ISO 4587

## Patentansprüche

1. Polymere mit einem mittleren Molekulargewicht $M_n$ von grösser als 1000 bestehend aus gleichen oder verschiedenen wiederkehrende Einheiten der Formel I

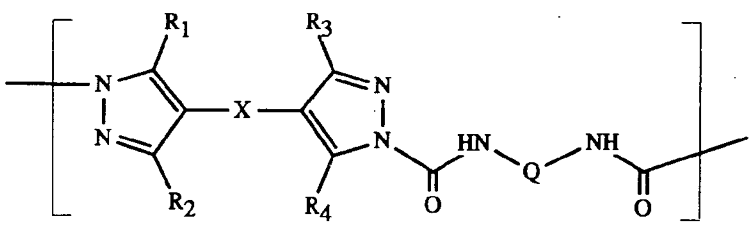

(I),

worin $R_1$, $R_2$, $R_3$ und $R_4$ unabhängig voneinander Wasserstoff, $C_1$-$C_4$-Alkyl, $C_6$-$C_{10}$-Aryl oder -$OR_5$ bedeuten, wobei $R_5$ Wasserstoff oder $C_1$-$C_4$-Alkyl bedeutet,
X eine direkte Bindung oder einen zweiwertigen aliphatischen oder araliphatischen Rest mit bis zu 20 Kohlenstoffatomen darstellt und
Q einen zweiwertigen Alkyl-, Cycloalkyl-, Aralkyl- oder Arylrest oder einen heterocyclischen Rest bedeutet.

2. Polymere gemäss Anspruch 1, worin X eine direkte Bindung oder einen Rest der Formel

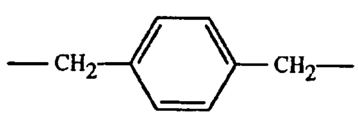

bedeutet.

3. Polymere gemäss Anspruch 1, worin Q einen Rest der Formeln

$-(CH_2)_6-$ , 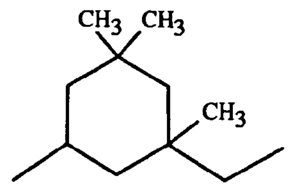 ,

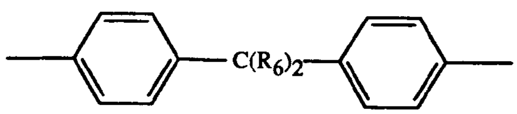

darstellt, wobei die Reste $R_6$ unabhängig voneinander Wasserstoff oder $C_1$-$C_4$-Alkyl bedeuten.

4. Polymere gemäss Anspruch 1, worin $R_1$, $R_2$, $R_3$ und $R_4$ jeweils Methyl bedeuten.

5. Wärmehärtbare Zusammensetzungen enthaltend.
   a) mindestens ein Polymer gemäss Anspruch 1 und
   b1) mindestens ein primäres oder sekundäres Polyamine mit einer Funktionalität von gleich oder grösser als 2 oder
   b2) mindestens ein Polyol mit einer Funktionalität von gleich oder grösser als 2.

6. Zusammensetzungen gemäss Anspruch 5 enthaltend als Komponente b1) ein Polyoxyalkylenpolyamin.

7. Zusammensetzungen gemäss Anspruch 6 enthaltend als Komponente b1) ein Polyoxypropylenpolyamin oder ein Polyoxyethylenpolyamin.

8. Zusammensetzungen gemäss Anspruch 5 enthaltend als Komponente b2) ein Polyoxyalkylenpolyol.

9. Zusammensetzungen gemäss Anspruch 8 enthaltend als Komponente b2) ein Polypropylenglykol oder ein Polyethylenglykol.

10. Verwendung der Zusammensetzungen gemäss Anspruch 5 als Einkomponentenklebstoffe.

**Patentansprüche für folgenden Vertragsstaat: ES**

1. Verfahren zur Herstellung von Polymeren mit einem mittleren Molekulargewicht $M_n$ von grösser als 1000 bestehend aus gleichen oder verschiedenen wiederkehrende Einheiten der Formel I

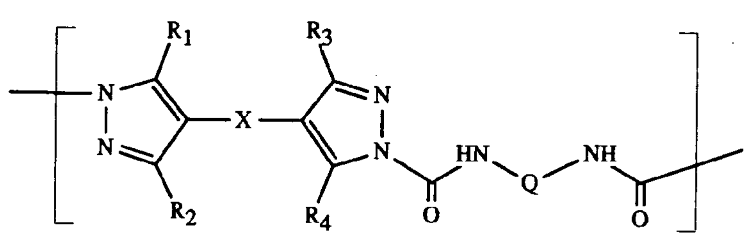 (I)

durch die Umsetzung eines Bispyrazols der Formel Ia

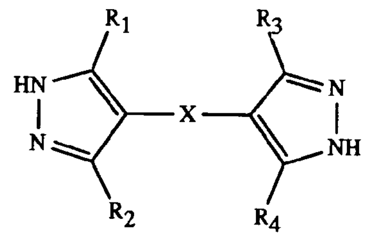

(Ia)

mit einem Diisocyanat der Formel Ib

OCN-Q-NCO (Ib),

worin $R_1$, $R_2$, $R_3$ und $R_4$ unabhängig voneinander Wasserstoff, $C_1$-$C_4$-Alkyl, $C_6$-$C_{10}$-Aryl oder -$OR_5$ bedeuten, wobei $R_5$ Wasserstoff oder $C_1$-$C_4$-Alkyl bedeutet,
X eine direkte Bindung oder einen zweiwertigen aliphatischen oder araliphatischen Rest mit bis zu 20 Kohlenstoffatomen darstellt und
Q einen zweiwertigen Alkyl-, Cycloalkyl-, Aralkyl- oder Arylrest oder einen heterocyclischen Rest bedeutet.

2. Verfahren gemäss Anspruch 1, worin X in den Formeln I und Ia eine direkte Bindung oder einen Rest der Formel

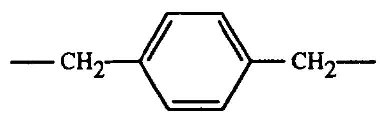

bedeutet.

3. Verfahren gemäss Anspruch 1, worin Q in den Formeln I und Ib einen Rest der Formeln

$-(CH_2)_6-$ ,

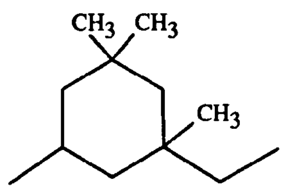

,

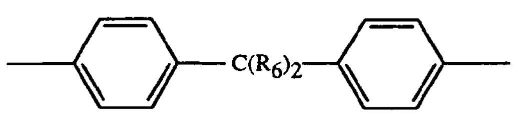

darstellt, wobei die Reste $R_6$ unabhängig voneinander Wasserstoff oder $C_1$-$C_4$-Alkyl bedeuten.

4. Verfahren gemäss Anspruch 1, worin $R_1$, $R_2$, $R_3$ und $R_4$ in den Formeln I und Ia jeweils Methyl bedeuten.

5. Wärmehärtbare Zusammensetzungen enthaltend
   a) mindestens ein Polymer gemäss Anspruch 1 und
   b1) mindestens ein primäres oder sekundäres Polyamine mit einer Funktionalität von gleich oder grösser als 2 oder
   b2) mindestens ein Polyol mit einer Funktionalität von gleich oder grösser als 2.

6. Zusammensetzungen gemäss Anspruch 5 enthaltend als Komponente b1) ein Polyoxyalkylenpolyamin.

7. Zusammensetzungen gemäss Anspruch 6 enthaltend als Komponente b1) ein Polyoxypropylenpolyamin

oder ein Polyoxyethylenpolyamin.

**8.** Zusammensetzungen gemäss Anspruch 5 enthaltend als Komponente b2) ein Polyoxyalkylenpolyol.

**9.** Zusammensetzungen gemäss Anspruch 8 enthaltend als Komponente b2) ein Polypropylenglykol oder ein Polyethylenglykol.

**10.** Verwendung der Zusammensetzungen gemäss Anspruch 5 als Einkomponentenklebstoffe.

Europäisches Patentamt

# EUROPÄISCHER RECHERCHENBERICHT

Nummer der Anmeldung

EP 92 81 0670

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
| A | FR-A-2 077 078 (LABOFINA)<br>----- | | C08G18/32<br>C08G73/06 |
| | | | RECHERCHIERTE SACHGEBIETE (Int. Cl.5 ) |
| | | | C08G |

Der vorliegende Recherchenbericht wurde für alle Patentansprüche erstellt

| Recherchenort | Abschlußdatum der Recherche | Prüfer |
|---|---|---|
| DEN HAAG | 14 JANUAR 1993 | VAN PUYMBROECK M. A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)